| | |
|---|---|
| (19) | Europäisches Patentamt<br>**European Patent Office**<br>Office européen des brevets | (11) Veröffentlichungsnummer: **0 243 885 B1** |

(12) **EUROPÄISCHE PATENTSCHRIFT**

| | | | |
|---|---|---|---|
| (45) | Veröffentlichungstag der Patentschrift: **22.12.93** | (51) | Int. Cl.⁵: **H04Q 7/00**, H04B 7/24, H04L 1/02 |
| (21) | Anmeldenummer: **87105972.1** | | |
| (22) | Anmeldetag: **23.04.87** | | |

(54) **Verfahren und Vorrichtung zum Verbindungsaufbau bei Kurzwellenfunknetzen.**

(30) Priorität: **30.04.86 CH 1773/86**

(43) Veröffentlichungstag der Anmeldung:
**04.11.87 Patentblatt 87/45**

(45) Bekanntmachung des Hinweises auf die
Patenterteilung:
**22.12.93 Patentblatt 93/51**

(84) Benannte Vertragsstaaten:
**AT BE DE ES FR GB IT NL SE**

(56) Entgegenhaltungen:
**WO-A-82/02633**
**DE-A- 2 042 133**

(73) Patentinhaber: **Ascom Radiocom AG**
**Ziegelmattstrasse 1**
**CH-4503 Solothurn(CH)**

(72) Erfinder: **Küng, Roland**
**Bühlhofstrasse 66A**
**CH-8633 Wolfhausen(CH)**
Erfinder: **Widmer, Hanspeter**
**Ueberlandstrasse 287**
**CH-8051 Zürich(CH)**

(74) Vertreter: **Schwerdtel, Eberhard, Dr.**
**Ascom Tech AG**
**Gewerblicher Rechtsschutz**
**Freiburgstrasse 370**
**CH-3018 Bern (CH)**

EP 0 243 885 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.6/3.3.1)

**Beschreibung**

Die Erfindung betrifft ein Verfahren und eine Empfangsvorrichtung zum Synchronisieren von Empfängern eines Kurzwellenfunknetzes mit jeweils einem Sender dieses Netzes zum Zwecke eines Verbindungsaufbaus entsprechend den Oberbegriffen der unabhängigen Ansprüche.

Kurzwellenverbindungen benützen hauptsächlich die Ausbreitung von Raumwellen, die an der Ionosphäre reflektiert werden, um eine Nachrichtenübertragung über grosse Distanzen zu realisieren. Trotz der Unzulänglichkeiten des Uebertragungskanals für eine Raumwellenverbindung - wie rauschähnliche Kanalstörungen, zeitvariantes, dispersives Kanalverhalten und Anwesenheit selektiver Störer - gewinnt diese Uebermittlungsart in jüngster Zeit, dank neuer Mikroprozessortechniken und im Vergleich zu Satelliten geringen Kosten, stark an Bedeutung.

Spezielle Probleme ergeben sich beim Verbindungsaufbau, weil zwischen Sender- und Empfängerfrequenz immer eine mehr oder weniger grosse Frequenzdifferenz (Offset) besteht und weil vor der Verbindungsaufnahme zwischen Sender und Empfänger keine Zeitsynchronisation gegeben ist.

Heute übliche Uebertragungen erfolgen zur ökonomischen Verwendung des Frequenzvorrats mittels Einseitenbandtechnik, wobei senderseitig eine Frequenztranslation des Signals aus dem Tonfrequenzband (300 Hz bis 3,4 kHz) in ein gewähltes HF-Band vorgenommen und vom HF-Empfänger die umgekehrte Operation durchgeführt wird. Das empfangene Signal wird im NF-Bereich an Demodulator- und Decoderschaltungen weitergegeben. Die HF-Empfänger verfügen über automatische Verstärkungsregelungen, wobei die Gesamtleistung oder -spannung innerhalb der gewählten Empfangskanalbandbreite die Regelgrösse bildet. Dabei stellen sich am Ausgang je nach spektraler Belegung von Nutz- und Störsignal unterschiedliche Geräusch- und Nutzpegel ein und zwar in weiten Grenzen. Insbesondere sind selektive Störer, die mehr Signalenergie aufweisen als das Nutzsignal, häufig anzutreffen und der Kanal gilt dann zumeist als besetzt.

Bei einem Selektivrufnetz sollen sich verschiedene Stationen einzeln oder mit einem Sammelwort aktivieren lassen. Die Selektivrufsender und -empfänger der einzelnen Stationen sind in deren Modulatorbzw. Demodulatorblock untergebracht. Die Rufsignale setzen sich aus einem Satz von geeigneten Amplituden-Zeit-Funktionen zusammen, die von den einzelnen Empfängern im Kanalgeräusch erkannt und voneinander unterschieden werden können. Auch bei schlechter Uebertragungsqualität sollen einerseits keine falschen Stationen und anderseits die gewünschten Stationen immer aktiviert werden.

Heute übliche Pilottonübertragungen vermögen diese Anforderungen nicht zu erfüllen, weil die Fehlsynchronisations-Wahrscheinlichkeit mit der Anwesenheit bestimmter Störungen ansteigt.

Es ist bekannt, zusätzlich zu den Sender-Empfängerteilen der Stationen ein relativ aufwendiges Gerätesystem zu verwenden, mit welchem feststellbar ist, welcher Kanal frei und ungestört von Nachbarsendern ist und wie die momentanen Ausbreitungsbedingungen über die Ionosphäre sind (Frequency Management System, Defence Electronics, Mai 1980, S. 21, 22). Ein vollautomatischer Aufbau einer Kurzwellenverbindung ist jedoch mit diesem System nicht möglich. Bei bewusst gewollten Störern (ECM) nützt eine vorgängige Kanalanalyse nur wenig, da der benützte Kanal jeweils sofort gestört wird.

Es ist schliesslich aus der Schrift WO 82/02633 eine HF-Funkübertragungsmethode bekannt, bei der die Signale aufeinanderfolgend mit fünf Doppelton-Kanälen codiert werden. Ein jeweiliges Synchronisations-Signal sorgt für genaues Timing in den Empfängern. Dieses Synchronisations-Signal besteht ebenfalls aus fünf Doppelton-Mark- und Space-Signalen, die seriell im Takt von 10 Hz abwechseln, wobei die Frequenz dieser Signale im Bereich von 400 Hz bis 2,7 kHz liegt.

Es ist die Aufgabe der Erfindung, ein Verfahren der eingangs genannten Art anzugeben, mit welchem der Aufbau von Kurzwellenverbindungen zwischen den Stationen eines Funknetzes vollautomatisch durchführbar ist, wobei auch bei schlechter Uebertragungsqualität immer nur ausschliesslich die gewünschten Stationen aktiviert werden sollen.

Diese Aufgabe wird erfindungsgemäss dadurch gelöst, dass ein markantes und an den Uebertragungskanal angepasstes Synchronisationssignal verwendet wird, welches aus schmalbandigen Mark- und Space-Signalen besteht, welche die Teilsignale eines Diversity-Paares bilden.

Die Verwendung des erfindungsgemässen Synchronisationssignals hat den Vorteil, dass es gleichzeitig mit der Bestimmung des Frequenzoffsets eine Bitsynchronisation zwischen den Stationen ermöglicht, indem die Phase des das Trägersignal modulierenden Modulationssignals am Empfangsort bestimmt wird. Das Modulationssignal wird mathematisch exakt gewonnen, da das erwartete Signal bekannt ist. Dadurch ist ein durch die Anwesenheit bestimmter Störungen verursachter Anstieg der Fehlsynchronisations-Wahrscheinlichkeit weitgehend vermeidbar. Der Aufbau des Synchronisationssignals aus schmalbandigen Mark- und Space- Signalen, die die Teilsignale eines Diversity-Paares bilden, eröffnet die Möglichkeit einer separaten Detektion dieser Teilsignale, was die Zuverlässigkeit des Verbindungsaufbaus ganz beträchtlich erhöht. Denn die Wahrscheinlichkeit, das in beiden Diversity-Kanälen ein gleichzeitig genau auf das Markierungssignal treffender Störer vorhanden ist, ist gleich Null. Eine Frequenzablage von wenigen Hz zwischen Störer und Markierungssignal ist bereits unkritisch, da mittels einer speziellen Operation der Signalverarbeitung 500 Subkanäle zu je 1 Hz im Bereich zwischen 250 und 750 Hz untersucht werden.

Die Erfindung betrifft weiter eine Vorrichtung zur Durchführung des genannten Verfahrens, mit einem Synchronisationssignalempfänger.

Die erfindungsgemässe Vorrichtung ist dadurch gekennzeichnet, dass der Synchronisationssignalempfänger Mittel zur unabhängigen Detektion und Auswertung der beiden Teilsignale des Diversity-Paares sowie Mittel zum Vergleich der daraus gewonnenen Ergebnisse aufweist.

Im folgenden wird die Erfindung anhand eines in den Zeichnungen dargestellten Ausführungsbeispiels näher erläutert; dabei zeigt:

Fig. 1 ein Blockschaltbild einer üblichen Kurzwellenverbindung mit Sender und Empfänger,

Fig. 2 eine schematische Darstellung eines Rufsignals,

Fig. 3 eine schematische Darstellung eines erfindungsgemässen Synchronisationssignals,

Fig. 4 ein Diagramm zur Funktionserläuterung,

Fig. 5 ein Blockschema des Eingangsteils eines erfindungsgemässen Synchronisationssignalempfängers,

Fig. 6 ein Diagramm zur Darstellung der Frequenzbelegung der einzelnen Filter des Eingangsteils von Fig. 5,

Fig. 7a,7b ein Blockdiagramm der numerischen Signalverarbeitung eines erfindungsgemässen Synchronisationssignalempfängers, und

Fig. 8 ein Diagramm zur Funktionserläuterung.

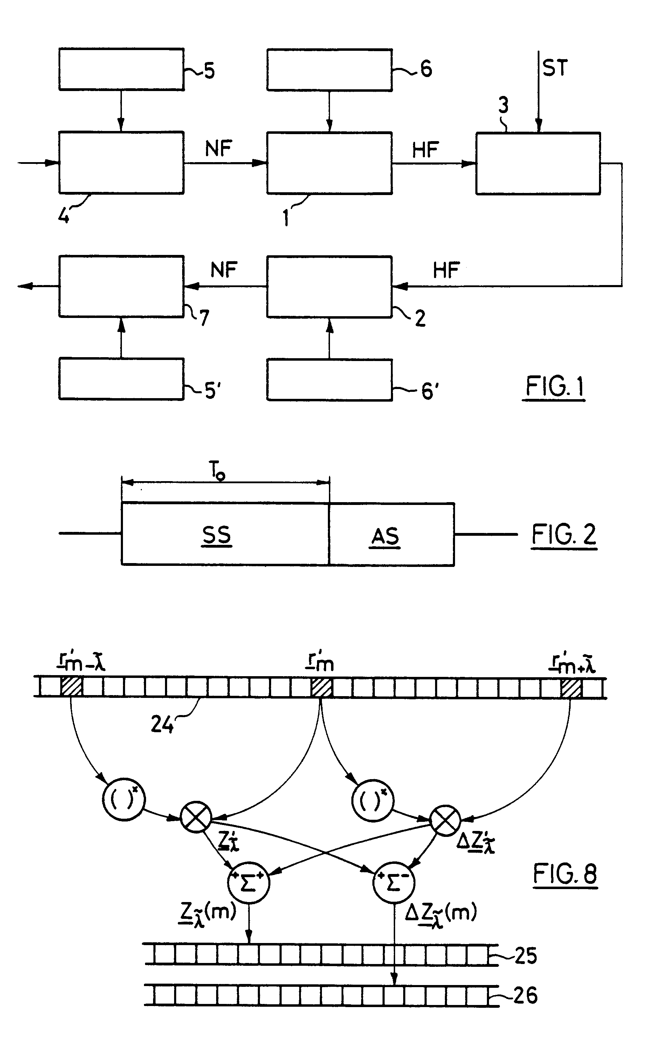

Gemäss Fig. 1 besteht eine übliche heute verwendete Kurzwellenverbindung aus einem Sender 1 und einem Empfänger 2 zwischen denen die Signale über ein Uebertragungsmedium 3 übertragen werden. Die senderseitige Dateneingabe erfolgt in eine Modulator-/Coderschaltung 4, welcher eine Zeitbasis 5 zugeordnet ist. Das Ausgangssignal der Modulator-/Coderschaltung 4 ist ein NF-Signal im Tonfrequenzband zwischen 300 Hz und 3,4 kHz. Mit diesem NF-Signal wird durch den Sender 1, der ein HF-SSB-Sender ist, eine Frequenztranslation in ein gewähltes HF-Band vorgenommen. Dem Sender 1 ist eine Frequenzbasis 6 im Bereich des HF-Bandes zugeordnet. Das in das zeitvariante Uebertragungsmedium 3 ausgesandte HF-Ausgangssignal des Senders 1 liegt beispielsweise im Bereich zwischen 3 und 30 MHz. Zu diesem HF-Signal kommt im Uebertragungsmedium 3 ein additives Störgeräusch ST hinzu.

Im HF-SSB-Empfänger 2, welchem eine HF-Frequenzbasis 6' zugeordnet ist, wird das empfangene HF-Signal in ein NF-Signal im senderseitigen Tonfrequenzband transferiert und einer Demodulator-/Decoderschaltung 7 zugeführt, welcher eine Zeitbasis 5' zugeordnet ist. Am Ausgang der Demodulator-/Decoderschaltung 7 erfolgt die Datenausgabe.

Wenn ein Kurzwellenfunknetz ein sogenanntes Selektivrufnetz bildet, dann ist eine Anzahl verschiedener Stationen vorhanden, welche einzeln oder mit einem Sammelruf aktivierbar sind. Dazu verfügt jede der beteiligten Stationen über einen Selektivrufsender und -empfänger, welche im Modulator- und Demodulatorblock 4 bzw. 7 der Anordnung von Fig. 1 untergebracht sind (siehe dazu beispielsweise DE-PS 32 11 325). Die Signale zum Aufruf, die sogenannten Rufsignale, setzen sich aus einem Satz von geeigneten Amplituden-Zeit-Funktionen zusammen, die von den einzelnen Empfängern im Kanalgeräusch erkannt und voneinander unterschieden werden können.

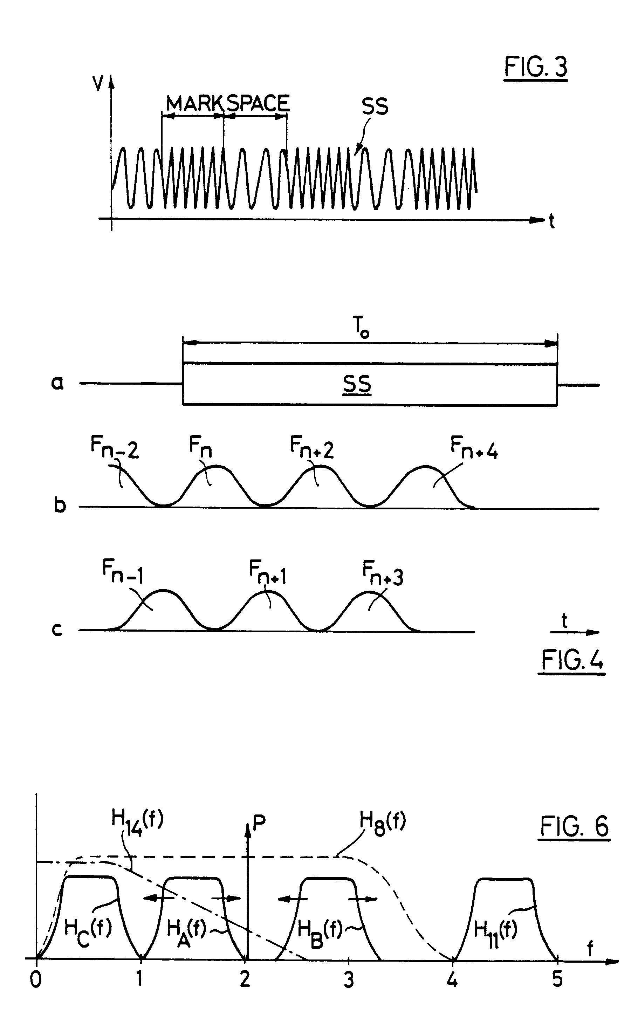

In Fig. 2 ist schematisch ein beim erfindungsgemässen Verfahren verwendetes Rufsignal dargestellt. Dieses besteht darstellungsgemäss aus einem Synchronisationssignal SS und aus einem Adressignal AS. Der Empfänger betrachtet jeweils Zeitintervalle der Länge T und entscheidet, ob innerhalb des jeweiligen Intervalls ein Synchronisationssignal SS vorhanden ist oder nicht.Die Beobachtungsintervalle werden mit einer Fensterfunktion gewichtet (Fig. 4). Vorzugsweise wird für das Synchronisationssignal SS eine Zeitdauer von 2s reserviert. Damit sich im anfänglichen, desynchronen Zustand mindestens ein Beobachtungsintervall mit dem Sendersignal vollständig überlappt, darf T höchstens $\frac{4}{3}$ s betragen. Dabei ist die Länge T des Beobachtungsintervalls nur dann sinnvoll gewählt, wenn sie kürzer ist als die Kohärenzzeit $T_c$ des empfangenen Signals. Mit dem gewählten Zeitfenster sollte $T_c > \frac{T}{2}$ sein. Weitere Kriterien, wie die Verbreiterung der spektralen Komponenten des Synchronisationssignals SS durch Phasenvariationen auf dem Uebertragungskanal und die Frequenzdrift zwischen Sende- und Empfangsstation, welche beide die Beobachtungszeit beschränken, haben zu einer Länge des Beobachtungsintervalls von T = 1s geführt.

Beim erfindungsgemässen Verfahren kennt der Empfänger die genaue Trägerfrequenz des Senders nicht, es besteht jedoch ein Erwartungsbereich, in welchem ein Rufsignal mit höchster Wahrscheinlichkeit auftritt. Dieser Erwartungsbereich kann in Abhängigkeit von der Technologie von Sender und Empfänger bis zu 500 Hz umfassen und beträgt beim beschriebenen Ausführungsbei spiel ±234 Hz. Innerhalb dieses Bereichs soll ein Rufsignal einwandfrei detektierbar sein und sein Frequenzoffset soll abhängig vom Signal/Geräuschverhältnis auf mindestens ±1 Hz genau bestimmt werden. Eine eindeutige Detektion soll möglich sein für ein Signal/Geräuschverhältnis bis mindestens -24 dB, bezogen auf 2 kHz Bandbreite.

Wegen des grossen Erwartungsbereichs können keine sehr schmalen Filter für die Filterung des Nutzsignals vom Geräusch verwendet werden. Insbesondere starke selektive Störer verhindern eine Bestimmung des exakten Frequenzoffsets mittels herkömmlicher Analogtechnik. Deshalb wird für das Synchronisationssignal SS ein markantes Signal gewählt, welches an den Uebertragungskanal angepasst und in einer gestörten Umgebung gut zu detektieren ist.

In Fig. 3 ist das beim erfindungsgemässen Verfahren verwendete Synchronisationssignal SS dargestellt, wobei auf der Ordinate des Diagramms die Amplitude V und auf der Abszisse die Zeit t aufgetragen ist. Dieses während der Zeitdauer $T_o$ ausgesandte Synchronisationssignal SS ist ein niederfrequentes Trägersignal, welches mit einer Rechteckfunktion frequenzmoduliert und auch als FSK-Signal bekannt ist. Es besteht darstellungsgemäss aus "Mark"- und "Space"-Signalen.

Das Synchronisationssignal SS ermöglicht gleichzeitig mit der Bestimmung des Frequenzoffsets eine Bitsynchronisation zwischen den Stationen, indem am Empfangsort die Phase des Modulationssignals bestimmt wird. Senderseitig ist die Modulationsfrequenz quarz-genau vorgegeben und sie ist dem Empfänger bekannt. Die Phase soll auf mindestens 0,5 rad genau bestimmt werden können.

Die Mark- und Space-Signale, jedes für sich ein AM-Signal, sind schmalbandig, um eine gleichförmige Variation der intensivsten spektralen Anteile bei selektivem Schwund zu gewährleisten. Der Frequenzabstand zwischen ihnen ist möglichst gross gewählt, um zwei bezüglich selektivem Schwund dekorrelierte Signale zu erhalten, die jedoch beide innerhalb desselben Kanals liegen. Die Umtastfrequenz ist deutlich grösser als die Schwundfrequenz und Laufzeitunterschiede sollen eine geringe Rolle spielen.

Aufgrund dieser Bedingungen und Ueberlegungen wird eine Modulationsfrequenz von 16 Hz gewählt, für das Mark-Signal ein Basisbandträger um 2 kHz und für das Space-Signal ein Basisbandträger um 500 Hz. Beide Träger sind jedoch variierbar, um adaptive Verschiebungen der AM-Signale möglich zu machen.

Mark- und Space-Signale werden vom Empfänger als ein AM-Diversity-Paar betrachtet und separat detektiert Dies hat den zusätzlichen Vorteil, dass bei ungleicher Störsignalverteilung auf dem Kanal die Detektionszuverlässigkeit stark steigt. Das Gesamtsignal hat konstante Leistung (kein FSK, AM-Anteil), ermöglicht einen nichtlinearen Verstärkerbetrieb und eine optimale Ausnützung der Senderstufe und ist ausserdem von selektiven Störsignalen deutlich zu unterscheiden.

Wenn der HF-Empfänger im automatischen Scan-Betrieb, beispielsweise SELSCAN (eingetragenes Warenzeichen der Firma Rockwell-Collins) steht, dann untersucht er periodisch eine bestimmte Anzahl programmierter Kanäle auf ein allfälliges Synchronisationssignal. Dieses wird vom Sender so lange ausgesendet, wie ein Scan-Zyklus dauert. Nach erfolgeicher Detektion eines Synchronisationssignals stoppt der Empfänger den Scan-Betrieb und wartet auf das Adressignal AS (Fig. 2).

Wie schon erwähnt wurde, betrachtet der Empfänger Zeitintervalle der Länge T und entscheidet, ob innnerhalb der jeweiligen Intervalle ein Synchronisationssignal vorhanden ist. Dabei werden die Beobachtungsintervalle mit einer Fensterfunktion gewichtet. In Fig. 4 ist in Zeile a ein Synchronisationssignal SS der Länge $T_o$ dargestellt, in den Zeilen b und c (nicht massstabgetreu) die Fenster der Beobachtungsintervalle, und zwar in Zeile b die geradzahligen Fenster $F_{n-2}$, $F_n$, $F_{n+2}$ usw. und in Zeile c die ungeradzahligen $F_{n-1}$, $F_{n+1}$, usw.

Wie einem Vergleich der Zeilen b und c von Fig. 4 zu entnehmen ist, überlappen sich die einzelnen Intervalle um die Hälfte der Zeit, um eine möglichst lückenlose Beobachtung über die Zeitachse t zu ermöglichen. Die Länge T eines Beobachtungsintervalls beträgt 1 s und ist von der Länge $T_o$ des Synchronisationssignals SS und von der Kohärenzzeit $T_c$ des Kanals bestimmt.

Detektionswerte zweier sich überlappenden Beobachtungsintervalle sind wegen der Fensterfunktion praktisch statistisch unabhängig, so dass sich während einer Zeitdauer T der Aussendung des Synchronisationssignals SS etwa

$$\frac{2T_o}{T}$$

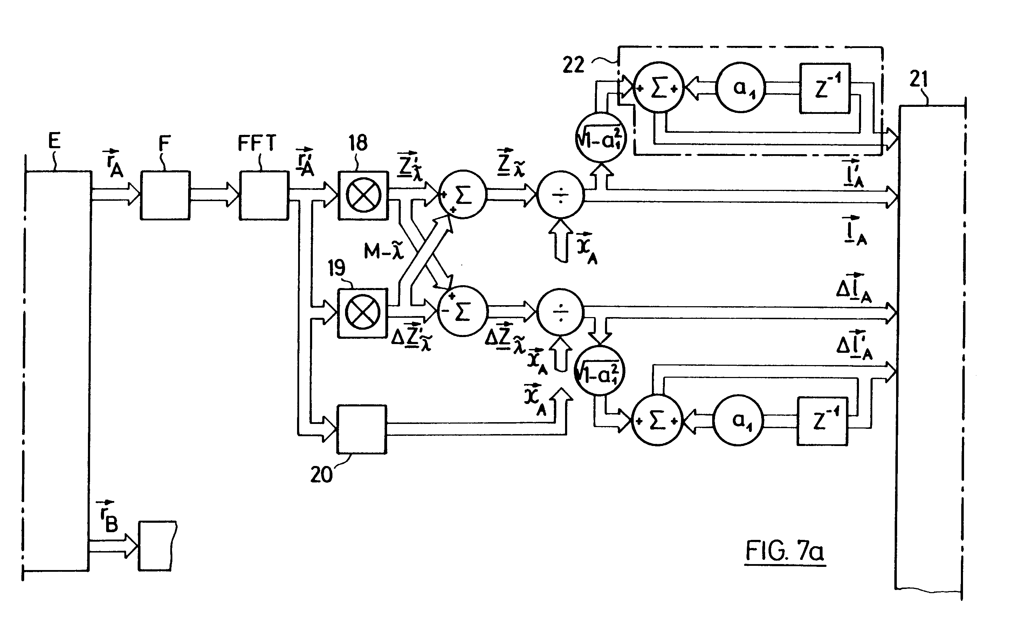

Detektionswerte entnehmen lassen. Zusätzlich ermöglicht die geeignete Wahl der Fensterfunktion eine hohe Dynamik im spektralen Bereich nach Durchführung der schnellen Fouriertransformation FFT (Fig. 7a).

Bei einer längeren Aussendung des Synchronisationssignals SS entstünde selbstverständlich eine Erhöhung der Detektionswahrscheinlichkeit.

Ein wesentlich grösserer zusätzlicher Gewinn entsteht jedoch dann, wenn die Detektionswerte über mehrere Beobachtungsintervalle gemittelt werden. Der Empfänger akkumuliert deswegen laufend Detektionswerte in einem "verlustbehafteten Integrator" oder auch in einem digitalen Tiefpassfilter. In diesem Integrator kristallisieren sich die gewünschten Komponenten von den stochastischen Komponenten ähnlich wie bei einem Puzzle Stück für Stück heraus, so dass bis zu einer gewissen nutzbaren Integrationszeit ein zusehends schärfer werdendes Bild des Synchronisationssignals entsteht, aus welchem sowohl die Trägerfrequenz als auch der Phasenwinkel bestimmt werden können.

Das für eine erfolgreiche Detektion und Synchronisation mindestens erforderliche Signal/Geräuschverhältnis kann somit in gewissen Grenzen, abhängig von der Dauer der Aussendung des Synchronisationssignals, bis auf etwa -24 dB bei 2 kHz Rauschbandbreite abgesenkt werden.

Nach der Aussendung des Synchronisationssignals SS und dessen Detektion sind sämtliche auf dem gleichen Anrufkanal stehende Selektivrufempfänger synchronisiert. Es folgt nun unmittelbar auf das Synchronisationssignal SS ein Adressignal AS, welches den eigentlichen selektiven Aufruf vornimmt. Nach erfolgter Detektion des Adressignals ist dann auch die Wortsynchronisation, das heisst die vollständige Zeitsynchronisation zwischen Sender und Empfänger, hergestellt.

Der Empfänger führt zwei unabhängige Detektionen und Auswertungen der beiden Teilsignale des Diversity-Paares durch und vergleicht die Resultate nachträglich. Die beiden additiv gestörten Empfangssignale werden während jeder Beobachtungsdauer T von einem A/D-Wandler nach vorgängiger Analogverarbeitung (Filtern und Mischen) in eine Sequenz von je N numerischen Werten umgewandelt. In diesem Zusammenhang sei darauf hingewiesen, dass hier unter Empfänger ein Demodulator/Decoder in NF-Frequenzbereich (vgl. Demodulator/ Decoder 7 in Fig. 1) gemeint ist.

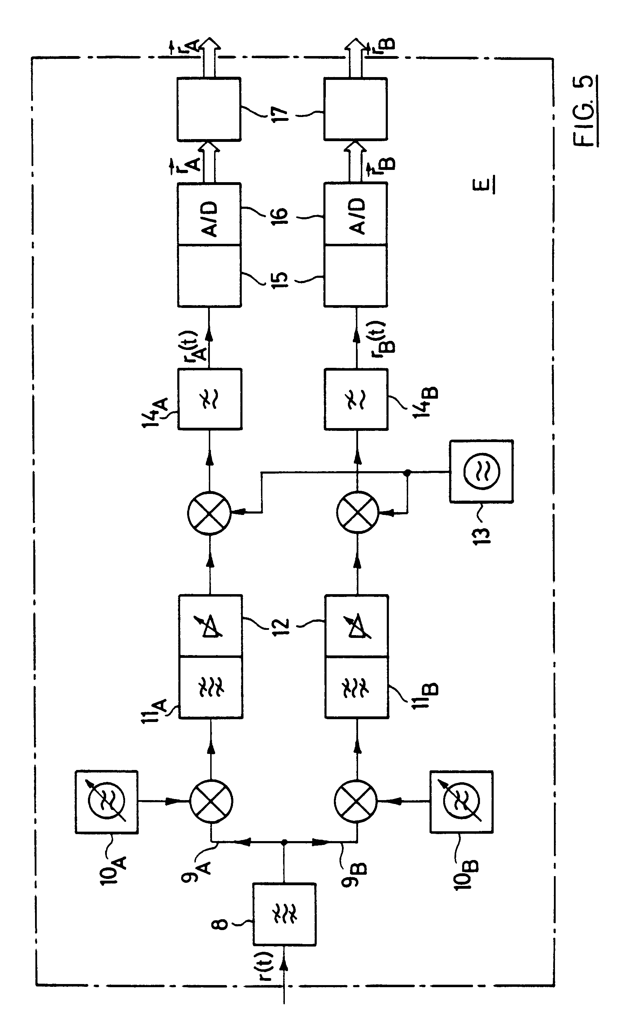

In Fig. 5 ist der die Analogverarbeitung durchführende Eingangsteil E des Synchronisationssignalempfängers dargestellt. Das empfangene Signal r(t) wird zuerst über ein Gesamtkanalfilter 8 mit einem Durchlassbereich von 300 Hz bis 3,4 kHz geführt, an dessen Ausgang zwei Pfade $9_A$ und $9_B$ für die beiden Teilsignale des Diversity-Paares angeschlossen sind. Mit einem ersten Mischer $10_A$ bzw. $10_B$ werden die Signale in jedem Pfad mit einem variablen Oszillator in dasselbe Empfangsband A bzw. B (vgl . Fig. 6) hinaufgemischt und anschliessend mit einem ZF-Filter $11_A$, $11_B$ gefiltert, dessen Durchlasskurve bei etwa 4,5 kHz liegt. Dadurch werden spektrale Ueberschneidungen bei dieser Vorselektion der Signale und damit auf bestmögliche Art eine Uebersteuerung des Empfängers sowie der bei digitaler Signalverarbeitung auszuschaltende "Aliasing" Effekt (Abtastfrequenz kleiner als doppelte höchste Frequenz der Signale) vermieden.

An die ZF-Filter $11_A$, $11_B$ ist je ein AGC-Verstärker 12 angeschlossen. Um die Abtastrate möglichst gering zu halten, werden in jedem Pfad $9_A$, $9_B$ die beiden Frequenzbereiche Mark und Space von 500 Hz Bandbreite mit einem zweiten Mischer 13 ins Basisband von 250 Hz bis 750 Hz, das als fixes Verarbeitungsband verwendet wird, heruntergemischt. Anschliessend erfolgt zum Zweck der Dämpfung eine Filterung mit einem Spiegelfrequenzfilter $14_A$, $14_B$. Das Ausgangssignal $r_A(t)$ und $r_B(t)$ der Spiegelfrequenzfilter $14_A$ bzw. $14_B$ gelangt je in einen Sampler 15 mit nachgeschalteten A/D-Wandler 16, an dessen Ausgang ein Signalvektor $\vec{r}_A$ bzw. $\vec{r}_B$ liegt.

Die Signalvektoren $\vec{r}_A$ und $\vec{r}_B$ enthalten je N Werte, die vorerst in einen Pufferspeicher 17 gelangen, von wo sie von einem Signalprozessor abgerufen werden können. Der Pufferspeicher 17 besteht aus drei Teilspeichern der Grösse $\frac{N}{2}$ ; ein Teil steht dem A/D-Wandler 16 zur Verfügung und zwei Teile dem Prozessor zur Verarbeitung.

In Fig. 6 ist die Frequenzbelegung durch die verschiedenen Filter des Eingangsteils E (Fig. 5) dargestellt, wobei auf der Abszisse die Frequenz f in kHz angegeben ist. Die gestrichelt eingetragene Kennlinie $H_8(f)$ entspricht der Durchlasscharakteristik des Gesamtkanalfilters 8, die strichpunktierte Kennlinie $H_{14}(f)$ derjenigen der Spiegelfrequenzfilter $14_A$, $14_B$, und der Pfeil P repräsentiert das Abtastsignal. Die Abtastfrequenz beträgt darstellungsgemäss 2,048 kHz. Die Kennlinie $H_c$ (f) repräsentiert das fixe Verarbeitungsband (Basisband von 250 bis 750 Hz), die Kennlinie $H_A$ (f) das variable Empfangsband für das eine Teilsignal (Pfad $9_A$, Fig. 5) und die Kennlinie $H_B(f)$ das variable Empfangsband für das andere Teilsignal (Pfad $9_B$, Fig. 5) des Diversity-Paares. $H_{11}$ (f) schliesslich ist die Durchlasskurve des ZF-Filters $11_A$, $11_B$ - (Fig. 5).

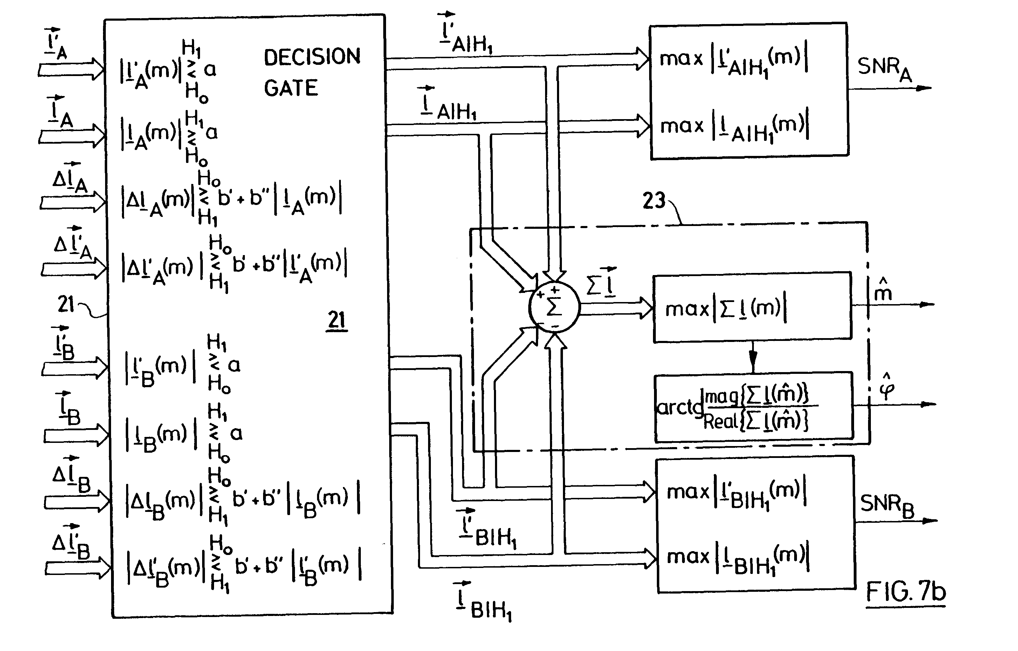

Anschliessend an die anhand von Fig. 5 beschriebene analoge erfolgt die numerische Signalverarbeitung des Synchronisationssignalempfängers, welche in Fig. 7 im Blockdiagramm dargestellt ist. Dieses Blockdiagramm zeigt die einzelnen Funktionsstufen der Signalverarbeitung, wie sie von dem durch einen Signalprozessor gebildeten entsprechenden Teil des Synchronisationsempfängers durchgeführt wird. Im Zusammenhang mit Fig. 7 wird nur noch eine Hälfte des Diversity-Empfängers betrachtet (Signalvektor $\vec{r}_A$), da dieser völlig symmetrisch aufgebaut ist. Mit dem zweiten Signalvektor ($\vec{r}_B$) erfolgt im Prozessor dieselbe Signalverarbeitung wie mit dem ersten ($\vec{r}_A$), nur mit anderen Zahlenwerten. Fig. 7 ist aus Gründen der Uebersichtlichkeit in zwei Figuren, 7a und 7b aufgeteilt. Fig. 7a zeigt die Signalverarbeitung bis zur sogenannten Hypothesenentscheidung und Fig. 7b zeigt die restlichen Funktionsstufen.

Das Resultat des Signalprozessors nach der numerischen Signalverarbeitung enthält die gewählte Hypothese, ob ein Synchronisationssignal vorhanden ist ($H_1$) oder nicht ($H_0$). Im Fall des Vorhandenseins ($H_1$) wird eine Abschätzung für den Frequenzoffset und die Phase der beiden Signale $\vec{r}_A$ und $\vec{r}_B$ sowie für die Werte von deren Signal/Geräuschverhältnis ausgegeben. Mit der numerischen Signalverarbeitung, die in Echtzeit durchgeführt wird, wird im wesentlichen geprüft, ob der Empfangsvektor $\vec{r}$ des N-dimensionalen Vektorraumes $\mathbb{R}$ im Entscheidungsgebiet der Hypothese $H_1$ oder $H_0$ liegt. Das Entscheidungsgebiet hat die Form eines N-dimensionalen Kegels mit der Spitze im Ursprung des Raumes $\mathbb{R}$. Der Betrag von $\vec{r}$ (oder die Gesamtleistung des Empfangssignales) beeinflussen diese Entscheidung nicht. Denn der Hypothesenwert basiert alleine auf der Richtung von $\vec{r}$. Das Entscheidungsgebiet ist somit ein N-dimensionales Raumwinkelgebiet. Die Untersuchung von $\vec{r}$ bezüglich seines Entscheidungsgebiets erfolgt anhand der nachfolgend im Zusammenhang mit Fig. 7 beschriebenen Rechenalgorithmen, welche lineare und nichtlineare Koordinatentransformationen darstellen.

Die erste Rechenoperation, der die N Werte des Signalvektors $\vec{r}_A$ (und auch $\vec{r}_B$, was aber wie erwähnt, nicht dargestellt ist) unterworfen werden, ist die Gewichtung mit der Fensterfunktion F, anschliessend erfolgt eine Fouriertransformation. Die letztere bildet den Vektor $\vec{r}$ des Raumes $\mathbb{R}$ in $\underline{r}'$ des Raumes $\mathbb{R}'$ ab. Die angewandte Fouriertransformation ist eine sogenannte schnelle Fouriertransformation FFT, die die rechnerisch schnellere Version der diskreten Fouriertransformation darstellt. Da das Synchronisationssignal periodischer Natur ist, entsteht mit dem Uebergang in den Frequenzbereich bei $\underline{r}'$ eine Separation in eigentliche Signal- und Geräuschkomponenten. Diese Separation in der Art einer Filterung ist umso besser, je höher die spektrale Auflösung der Fouriertransformation ist. Die Auflösung ihrerseits wird durch die Beobachtungszeit T oder die "Grösse" der FFT bestimmt.

Mit T = 1s und einer Abtastfrequenz $f_r$ von 2,048 kHz oder N = 2048 ergibt sich grundsätzlich eine spektrale Auflösung von 1 Hz, durch Einfügen einer Fensterfunktion F entsteht allerdings beim Nutzsignalspektrum eine Verbreiterung des Hauptzipfels auf 2 Hz und beim Geräuschspektrum eine Korrelation benachbarter Stützwerte. Die feine Auflösung ergibt zwischen dem Träger und den 16 Hz Seitenlinien des AM-modulierten Signales jedoch genügend unkorrelierte Rechenwerte, um das Geräusch einfach abschätzen zu können. Die Trennung in Signal und Geräusch erlaubt nun das Aufsuchen eines allfällig vorhandenen Synchronisationssignales, dessen Lokalisierung im Frequenzbereich zwischen 250 und 750 Hz und die Bestimmung des Modulationsphasenwinkels.

Der auf die Fouriertransformation FFT folgende Teil der Signalverarbeitung dient der Demodulierung (Identifikation) des Diversity-Paares, der Geräusch-Estimation, einer Signalintegration (Akkumulation) für schwer detektierbare Nutzsignale und zur Hypothesenentscheidung. Alle diese Teile der Signalverarbeitung sind selbstverständlich als numerische Operationen im Signalprozessor gelöst.

Im vorher berechneten Spektrum wird nun eine speziell dem Markierungssignal angepasste Demodulation vorgenommen, wobei möglichst viele charakteristische Merkmale bestimmt werden. Beim dargestellten Ausführungsbeispiels wird eine Art synchrone AM-Demodulation für eine Modulationsfrequenz $\lambda = 16$ Hz durchgeführt, und zwar für jeden möglichen Aufenthaltsort m des Signals, also, wenn M = Anzahl der Werte m, für etwa M = 500 Werte. Die Demodulation erfolgt im Frequenzbereich. Die verwendete Methode wird als Frequenz-Autokorrelationsfunktion bezeichnet:

$$\lambda = 16 \text{ Hz} \quad \Gamma(\lambda) = \int_{-\infty}^{\infty} S(f)\, S^*(f-\lambda)\,df + \int_{-\infty}^{\infty} S^*(f) \cdot S(f+\lambda)\,df$$

Dabei ist $S(f+\lambda)$ das obere Seitenband, $S(f-\lambda)$ das untere Seitenband und $S(f)$ ist der Träger, $S^*$ ist jeweils der konjugiert komplexe Wert. Die numerische Version der Frequenz-Autokorrelationsfunktion lautet folgendermassen:

$$\Gamma_m(\tilde{\lambda}) = \frac{1}{T} \sum_{m-f_g \cdot T}^{m+f_g \cdot T} S(m)\, S^*(m-\tilde{\lambda}) + \frac{1}{T} \sum_{m-f_g \cdot T}^{m+f_g \cdot T} S^*(m)\, S(m+\tilde{\lambda})$$

Dabei ist $\tilde{\lambda} = \lambda T = 16$ und $f_g$ die spektrale Bandbreite der Fensterfunktion.

Störsignale, auch AM-Signale mit einer anderen Modulation als 16 Hz ergeben dabei i.a. nur kleine Signalenergien, da sich die Vektoren für $S(f+\lambda)$, $S(f-\lambda)$ und $S(f)$ nicht unterstützen. In Fig. 7a sind zwei Demodulatoren 18 und 19 eingezeichnet, im ersten Demodulator 18 wird der Vektor

$$\vec{\underline{Z}\tilde{\lambda}}$$

der numerischen Version der Frequenz-Autokorrelationsfunktion

$$\Gamma_m^\cdot(\tilde{\lambda})$$

bestimmt und im zweiten Demodulator 19 der entsprechende Fehlervektor

$$\Delta\vec{\underline{Z}\tilde{\lambda}}.$$

Dabei werden folgende Merkmale der Demodulation berücksichtigt:
- Die Seitenbandlinien müssen an richtigen Frequenzort sein.
- Die Seitenbandlinien-Signalenergie muss bezüglich des Trägers in einen gewissen, für AM sinnvollen Bereich fallen.
- Der Vektor

$$\vec{\underline{Z}\tilde{\lambda}}$$

der numerischen Version der Frequenz-Autokorrelationsfunktion und der entsprechende Fehlervektor

$$\Delta\vec{\underline{Z}\tilde{\lambda}}$$

müssen innerhalb gewisser Grenzen liegen; ideal wäre $\vec{\underline{Z}}\to\infty$, $\Delta\vec{\underline{Z}}=0$.

Diese numerische Synchronisationssignal-Demodulation ist in Fig. 8 dargestellt. Man sieht, dass vom Träger $\underline{r}_m'$ (Komponente des Vektors $\vec{\underline{r}}'$ für $S(f)$), und vom oberen und unteren Seitenband

$$\underline{r}_{m+\lambda}' \quad bzw. \quad \underline{r}_{m-\tilde{\lambda}}'$$

(Komponenten des Vektors $\vec{\underline{r}}'$ für $S(f+\lambda)$ bzw. $S(f-\lambda)$) ausgegangen wird.

Die Werte

$$\underline{r}_{m-\tilde{\lambda}}' \; , \; \underline{r}_{m+\tilde{\lambda}}'$$

und $\underline{r}_m'$ befinden sich in einem FrequenzstützwerteSpeicher 24. Der konjugiert-komplexe Wert von

$$\underline{r}_{m-\tilde{\lambda}}'$$

und von $\underline{r}_m'$ wird jeweils mit $\underline{r}_m'$ bzw. mit

$$\underline{r}_{m+\tilde{\lambda}}'$$

7

multipliziert und die Ergebnisse dieser Multiplikationen werden addiert und subtrahiert, wodurch die Werte für den Vektor

$$\vec{\underline{Z}}_{\tilde{\lambda}}$$

(numerische Version der Frequenz-Autokorrelationfunktion) und für den Fehlervektor

$$\Delta\vec{\underline{Z}}_{\tilde{\lambda}}$$

gebildet werden. Diese Werte werden in entsprechenden Speichern 25 und 26 für die numerische Version der Frequenz-Autokorrelationsfunktion bzw. für den Fehlervektor abgelegt.

Diese Operation ist für ein AM-Signal relativ einfach. Grundsätzlich existiert aber für jede Modulationsart und für jedes Markierungssignal ein anderer idealer Demodulator. Mit der Wahl von $f_g \cdot T = 0{,}5$ wurde der optimale und zugleich einfache Demodulationsalgorithmus gefunden. Für den Träger m des AM-Signales gilt im gewählten Ausführungsbeispiel: $266 \leq m \leq 734$. Die Resultate der Demodulation für jede Frequenz im Erwartungsbereich des Signals werden vorerst abgespeichert.

Mit dem Bezugszeichen 20 ist in Fig. 7a der Geräuschestimator bezeichnet. Die Entscheidung über die Hypothesen, ob ein Synchronisationssignal vorhanden ist oder nicht, muss, da dem Empfänger weder Signalenergie nach Geräuschleistung im voraus bekannt sind, aufgrund des Signal/Geräuschverhältnisses beurteilt werden. Die Entscheidungsschwelle leitet sich aus der Fehlalarmwahrscheinlichkeit ab.

Die Bestimmung des Geräusches (entspricht dem Schätzwert der Varianz

$$\vec{\underline{Z}}_{\tilde{\lambda}})$$

geschieht mittels der in der nahen Umgebung von $\underline{r}'_m$,

$$\underline{r}'_{m-\tilde{\lambda}} \quad \text{und} \quad \underline{r}'_{m+\tilde{\lambda}}$$

(Fig. 8) liegenden spektralen Stützwerte und liefert auf diese Weise in der Umgebung des Synchronisationssignals eine lokale Leistungsdichte. Die ausgewählten Stützwerte werden genau gleich demoduliert wie bei der anhand von Fig. 8 beschriebenen Demodulation die Seitenbänder demoduliert werden. Nur ist $\tilde{\lambda}$ nicht mehr gleich 16.

Die Geräuschestimation soll eine kombinierte Variable $\vec{x}$ aus Geräuschenergie und Geräuschbeurteilung sein, um sowohl "weisses" Rauschen als auch Störsignale in ihrem Einfluss zu erfassen. Die detektierten

$$\vec{\underline{Z}}_{\lambda}$$

werden für jede mögliche Frequenz auf die lokale Geräuschvariable ($\vec{x}$) normiert und diese normierten Werte ($\vec{1}, \Delta\vec{1}$) werden einem Entscheider 21 zugeleitet, wobei für die Komponenten von $\vec{1}$ und $\Delta\vec{1}$ gilt:

$$\underline{1}_m = \frac{\underline{Z}_{\lambda m}}{\mathcal{X}_m} \qquad \Delta\underline{1}_m = \frac{\Delta\underline{Z}_{\lambda m}}{\mathcal{X}_m} \qquad 266 \leq m \leq 734$$

Für Fälle sehr geringer Signal/Geräuschverhältnisse ist eine Akkumulation in Form von Digitalfiltern vorgesehen die die Werte $\vec{1}$ und $\Delta\vec{1}$ über mehrere Beobachtungsintervalle verwendet, was zu einer Verbesserung des Signal/Geräuschverhältnisses führt. Ein Beispiel für eine derartige Filterung ist in Fig. 7a mit dem Bezugszeichen 22 bezeichnet. Der Gewinn kann ohne weiteres 14 dB betragen, bei Akkumulation von 20 Beobachtungsintervallen.

Für die Signaldetektion ist allein das Grundrauschen massgebend, auf das sich die Detektionsschwelle bezieht. Einzelne schmale Linien mit grossen Leistungsdichten im Vergleich zu diesem Grundrauschen müssen aus der Geräuschstatistik entfernt werden. Mit Hilfe der Geräuschbeurteilung wird ein Schutz gegen gefährliche Falschsignale erreicht. Falschsignale sind dabei dem Synchronisationssignal ähnliche Signale mit beispielsweise fast gleicher Modulationsfrequenz oder zu kurzer Anwesenheitszeit.

Um zu verhindern, dass derartige Falschsignale fälschlicherweise als Synchronisationssignal bewertet werden, wird aus dem Träger für die Demodulation und den Seitenbändern $r'_m$ bzw.

$$ r'_{-m+16} \quad , \quad r'_{-m-16} $$

(Modulationsfrequenz gleich 16 Hz) direkt benachbarten Werten eine zweite Geräuschstatistik gebildet und die beiden Geräuschstatistiken werden dividiert, wobei der Quotient darüber entscheidet, welche Geräuschstatistik zu verwenden ist. Im allgemeinen wird aber die schon erwähnte kombinierte Variable $\vec{x}$ erzeugt.

Die nun normierten Testgrössen $I_m$, $\Delta I_m$, $I'_m$ und $\Delta I'_m$, die aus N Abtastwerten einer Zeitfunktion der Dauer T oder mehrerer T resultieren, werden im Entscheider 21 (Decision-Gate) geprüft. Für jedes sich mit dem vorangehenden und dem folgenden Intervall überlappende Beobachtungsintervall T werden zuerst für jede Frequenz m ($266 \le m \le 734$) die Grössen $I_m$ und $\Delta I_m$ herangezogen. Die Intervallüberlappung wird bei der schnellen Fouriertransformation FFT bewusst verwendet, um Energieverluste durch die Fensterfunktion F zurückzugewinnen.

Der erste Test lautet:

$$ \left| I_{-m} \right| \underset{H_0}{\overset{H_1}{\gtrless}} a \qquad 266 \le m \le 734 $$

Ist der Ausgang positiv, also $H_1$ ($=$ Synchronisationssignal vorhanden), so wird geprüft:

$$ \left| \Delta I_{-m} \right| \underset{H_1}{\overset{H_0}{\gtrless}} b' + b'' \left| I_{-m} \right| $$

In dieser Bedingung, mit der die spektrale Symmetrie geprüft wird, muss die Schwelle von der Grösse $|I_m|$ abhängig sein. Die Grösse a des ersten Tests ist ihrerseits eine gewisse Funktion der Geräuschstatistik; für eine bestimmte Anzahl verwendeter Geräuschstützwerte lässt sich jeweils eine optimale Schwelle angeben, die in einer RAM-Tabelle gespeichert ist. Erfüllt $I_m$ bzw. $\Delta I_m$ die Tests nicht, so werden diese Vektorkomponenten $= 0$ gesetzt. Die Werte $I'_m$ und $\Delta I'_m$ werden nach demselben Verfahren entschieden.

Zur Bestimmung der Signal/Geräusch-Kombinationsgrösse $SNR_A$ (bzw. $SNR_B$ des anderen Teils des Diversity-Paares) (Fig. 7b) braucht lediglich das Maximum von $|I_m|$ und $|I'_m|$ gesucht zu werden. Dieses Maximum ist dann gleich dem Signal/Geräuschverhältnis für diesen Kanal in der Umgebung des Synchronisationssignales.

Zur Bestimmung der Frequenz und Phase des Synchronisationssignales ist für das gewählte Synchronisationssignal bei Verwendung irgendeiner Art Diversity ein sogenanntes Diversity Combining (Fig. 7b) notwendig. Dabei ist wichtig, dass bei der Synchronisationssignal-Aufbereitung bekannte, starre Beziehungen zwischen den einzelnen Signalen herrschen. Beim gewählten Diversity-Paar aus 2 AM-Signalen ist dank der Detektorsymmetrie lediglich die Phasenverschiebung der Modulationssignale von 16 Hz um den Winkel $\pi$ zu berücksichtigen, d.h. man bildet:

$$\vec{I}_{A|H_1} \quad - \quad \vec{I}_{B|H_1} \quad = \quad \vec{I}_{A-B \mid H_1}$$

und

$$\vec{I}'_{A|H_1} \quad - \quad \vec{I}'_{B|H_1} \quad = \quad \vec{I}'_{A-B \mid H_1}$$

Es findet also nur dann ein Diversity Combining 23 statt, wenn auf beiden Kanälen A und B für die Hypothese $H_1$ entschieden wurde. Für den Fall der Kombinierung resultiert somit ein Gewinn von 3 dB für die Phasen- und Frequenzestimation. Auf Kurzwellenkanälen ist jedoch schon die Verwendung von Frequenzdiversity an sich mit einem hohen Gewinn behaftet, da oft ein Kanalteil stark gestört ist oder unter Fading leidet.

Die Frequenz- und die Phasenestimation werden an der Summe

$$\vec{I}_{A-B|H_1} \quad + \quad \vec{I}'_{A-B|H_1} \quad = \sum \vec{I}$$

durchgeführt. Wird $H_1$ an mehreren Orten auf der Frequenzachse erfüllt, dann wird die Frequenz mit dem grössten $|\Sigma\ I_m|$ ausgewählt. $\hat{m}$ bezeichnet dann die geschätzte Frequenzposition und die Phase $\hat{\phi}$ wird in einer Tabelle mit arctg-Werten aus der Vektorkomponente

$$\sum \vec{I}_{\hat{m}}$$

bestimmt.

Der nach dem beschriebenen Verfahren arbeitende Synchronisationssignalempfänger hat den Vorteil, dass dank vollständiger Software-Echtzeit-Realisation des Empfängers viele Parameter optimiert und variiert werden können; so kann beispielsweise für eine vorgegebene Estimationszuverlässigkeit die Detektionsempfindlichkeit optimiert werden. Die Hauptvorteile des Empfängers bestehen in der grossen Flexibilität in der Spezifikation, in der alterungsfreien Realisation und im Erreichen einer Detektionssicherheit, die nahe an der der theoretisch maximal erreichbaren liegt. Dies wird ermöglicht durch den in Fig. 7 dargestellten Operationsablauf und durch die digitale Signalverarbeitung, welche erst die geforderte Präzision ermöglicht.

Das System kann ohne Mehraufwand auf mehrere Sendekanäle für Scan-Betrieb erweitert werden und es ist auch Mikro-Scan Betrieb (Aufteilung eines Kanals von 3 kHz Breite in 500 Hz Teilkanäle) möglich. Ausserdem können nach Detektion der Freiheitsgrade Frequenz und Phase Driften laufend korrigiert und es kann anstelle des Synchronisationssignals auf ähnliche Weise eine langsame Datenverbindung treten, indem die nun bekannten Freiheitsgrade durch neue ersetzt werden. Mit der beschriebenen Hardware lässt sich so ein Selektivrufsystem erstellen und daraus lässt sich wiederum ein Datenmodem für niedrige Baudraten ableiten, in dem anstelle der Selektivrufadresse Daten treten.

Zudem ist das beschriebene System dank des grossen Erwartungsbereichs des Synchronisationssignals in der Lage, aufgrund eigener Kanalmessungen (=passive Kanalanalyse) adaptiv zu Beginn eine Frequenzverschiebung neben Störsignale vorzunehmen, ohne dass der Empfänger deshalb einen Scan-Betrieb aufweisen muss. Ein Verbindungsaufbau ist ohne Kanalwechsel, d.h. ohne Synthesizereingriff praktisch immer gewährleistet.

Noch eine andere Art Funk-Betrieb nutzt die grosse S/J-Ueberlegenheit der Erfindung aus, indem nämlich Verbindungen mit kleinen Sendeleistungen und "schlechten" Antennen auf dieselbe Art sicher erstellt werden können.

Als ECCM-Betrieb ist zum Beispiel ein Verstecken des eigenen Signals hinter starken (beispielsweise feindlichen) Sendern möglich. Dies verunmöglicht eine rasche Peilung oder Störung während des Netzaufbaus oder während Netzkontrolle/Netzbetrieb.

**Patentansprüche**

1.  Verfahren zum Synchronisieren von Empfängern (2) eines Kurzwellenfunknetzes mit jeweils einem Sender (1) dieses Netzes zum Zwecke eines Verbindungsaufbaus,
    - wobei der jeweilige Sender (1) wiederholt Rufsignale aussendet, die sich aus jeweils einem Synchronisations-Signal (SS) einer vorgegebenen Länge ($T_0$) und einem nachfolgenden Adress-Signal (AS) zusammensetzen,
    - wobei das Synchronisations-Signal (SS) aus schmalbandigen Mark- und Space-Signalen besteht, die Teilsignale eines Diversity-Paares bilden und periodisch mit einer Modulationsfrequenz in der Grössenordnung von 10 Hz abwechseln, und
    - wobei der Basisbandträger für die Mark- und Space-Signale innerhalb eines Frecuenzbereiches von etwa 300 bis 3 400 Hz frei wählbar ist,
    dadurch gekennzeichnet in jedem Empfänger (2),
    - dass Beobachtungsintervalle gebildet werden, deren Länge (T) etwa der halben Lange ($T_0$) der Synchronisations-Signale (SS) entspricht,
    - dass die während der Beobachtungsintervalle am Empfänger (2) anstehenden Eingangssignale (r-(t)) zwei den Teilsignalen des Diversity-Paares zugeordneten Bearbeitungs- und Entscheidungs-Pfaden ($9_A$, $9_B$) zugeführt werden,
    - dass in jedem Pfad ($9_A$, $9_B$) die Signale zuerst analog und anschliessend digital bearbeitet werden,
        - wobei die Beobachtungsintervalle mit Fensterfunktionen (F) gewichtet werden, deren Intervalle einander überlappen,
        - wobei in jedem Pfad ($9_A$, $9_B$) die Signale am Ende der analogen Bearbeitung je in eine Sequenz mit einer Anzahl (N) von numerischen Werten umgewandelt werden, die Vektoren ($\vec{r}_A$, $\vec{r}_B$) mit einer der jeweiligen Anzahl (N) der numerischen Werte entsprechenden Anzahl von Vektorwerten bilden,
        - und wobei eine Entscheidung getroffen wird, ob ein Synchronisations-Signal (SS) vorhanden ($H_1$) oder nicht vorhanden ($H_0$) ist, indem mit der digitalen Bearbeitung geprfüft wird, ob die Vektoren ($\vec{r}_A$, $\vec{r}_B$) im Entscheidungsgebiet einer Hypothese ⟨Synchronisationssignal (SS) vorhanden ($H_1$) oder nicht vorhanden ($H_0$)⟩ liegen.

2.  Verfahren nach Anspruch 1,
    dadurch gekennzeichnet,
    dass die erste Operation der digitalen Bearbeitung jeweils durch eine schnelle Fouriertransformation (FFT) gebildet wird, bei welcher jeweils eine Separation in eigentliche Signal- und in Geräuschkomponenten erfolgt.

3.  Verfahren nach Anspruch 2,
    dadurch gekennzeichnet,
    - dass anschliessend an die schnellen Fouriertransformationen (FFT) jeweils eine Demodulierung des Diversity-Paares, eine Geräusch-Estimation und gegebenenfalls eine Signalintegration für schwer detektierbare Nutzsignale erfolgt, und
    - dass die Ergebnisse dieser Operationen die Basis für die Entscheidung ⟨Synchronisations-Signal (SS) vorhanden ($H_1$) oder nicht vorhanden ($H_0$)⟩ bilden.

4.  Verfahren nach Anspruch 3,
    dadurch gekennzeichnet,
    dass die Nutzsignale bezüglich des Geräusches normiert werden, so dass nur vom Signal/Geräuschverhältnis (SNR) abhängige Grössen bis zur Entscheidung ⟨Synchronisations-Signal (SS) vorhanden ($H_1$) oder nicht vorhanden ($H_0$)⟩ gelangen und Störträger und Falschsignale vorher eliminiert werden.

5.  Verfahren nach Anspruch 4,
    dadurch gekennzeichnet,
    dass nach der Entscheidung ⟨Synchronisations-Signal (SS) vorhanden ($H_1$) oder nicht vorhanden $H_0$)⟩ eine DiversityKombination stattfindet, aufgrund derer die Frequenz (m) und die Phase ($\widetilde{\varnothing}$) eines erkannten Synchronisations-Signals (SS) bestimmt werden.

**6.** Empfangsvorrichtung in einem Empfänger (2) eines Kurzwellenfunknetzes zum Empfangen und Erkennen von Synchronisations-Signalen (SS), die von einem Sender (1) dieses Netzes zum Zwecke eines Verbindungsaufbaus periodisch ausgesandt werden,

- wobei die Synchronisations-Signale (SS) aus schmalbandigen Mark- und Space-Signalen bestehen, die Teilsignale eines Diversity-Paares bilden, die periodisch mit einer Modulationsfrequenz in der Grössenordnung von 10 Hz abwechseln, und denen ein Adress-Signal (AS) folgt, und
- wobei der Basisbandträger für die Mark- und Space-Signale innerhalb eines Frequenzbereichs von etwa 300 bis 3 400 Hz frei wählbar ist,
  gekennzeichnet durch
- Mittel zur Bearbeitung und Auswertung der am Eingang der Empfangseinrichtung anliegenden Signale (r(t)),
- zwei im Aufbau gleiche Bearbeitungspfade ($9_A$, $9_B$), die den Teilsignalen des Diversity-Paares zugeordnet sind,
- analog arbeitende Einheiten (10-15) einschliesslich eines A/D-Wandlers (16) in einem ersten Teil jedes Bearbeitungspfades ($9_A$, $9_B$), und
- digital arbeitende Einheiten in einem zweiten Teil jedes Bearbeitungspfades ($9_A$, $9_B$), wobei dieser wenigstens einen Fenster-Bildner (F) zur Gewichtung von Zeitintervallen, eine schnelle Fouriertransformation-Einheit (FFT), einen Demodulierer (18, 19) des Diversity-Paares, einen GeräuschEstimator (20) und eine Entscheidungs-Einheit (21) zum Bilden einer Entscheidung ⟨Synchronisations-Signal (SS) vorhanden ($H_1$) oder nicht vorhanden ($H_0$)⟩ aufweist.

**7.** Vorrichtung nach Anspruch 6,
dadurch gekennzeichnet,
dass ein Gesamtkanalfilter (8) vorgesehen ist, das den beiden Pfaden ($9_A$, $9_B$) gemeinsam vorgeschaltet ist.

**8.** Vorrichtung nach Anspruch 6,
dadurch gekennzeichnet,
dass jeder der Pfade ($9_A$, $9_B$) in seinem ersten Teil wenigstens einen ersten und einen zweiten Mischer ($10_A$, $10_B$, 13), ein zwischen den Mischern angeordnetes ZF-Filter ($11_A$, $11_B$) sowie einen Sampler (15) und A/D-Wandler (16) aufweist.

**9.** Vorrichtung nach Anspruch 8,
dadurch gekennzeichnet,
dass jeden A/D-Wandler (16) ein Pufferspeicher (17) nachgeschaltet ist zum Speichern je einer Anzahl (N) von Ausgangswerten des A/D-Wandlers, die die Eingangsgrössen des zweiten Teils jedes Pfades ($9_A$, $9_B$) bilden.

**10.** Vorrichtung nach Anspruch 7,
dadurch gekennzeichnet,
dass ein Signalprozessor vorgesehen ist, der bei einer Entscheidung ⟨Synchronisations-Signal (SS) vorhanden⟩ Signal/Geräusch-Kombinationsgrössen ($SNR_A$, $SNR_B$) für die jeweiligen, erkannten Teilsignale des Diversity-Paares liefert.

**11.** Vorrichtung nach Anspruch 10,
dadurch gekennzeichnet,
dass der Signalprozessor ausgebildet ist für eine im Anschluss an die Entscheidung ⟨Synchronisations-Signal (SS) vorhanden⟩ vorzunehmende Operation Diversity-Kombination, durch die die Frequenz ($\hat{m}$) und die Phase ($\hat{\phi}$) des erkannten SynchronisationsSignals (SS) bestimmbar sind.

## Claims

**1.** A method of synchronising receivers (2) of a shortwave radio network with at least one transmitter (1) of this network for the purpose of establishing a connection link,

- in which the respective transmitter (1) repeatedly sends out call signals which are in each case composed of a synchronisation signal (SS) of a predetermined length ($T_O$) and a subsequent address signal (AS),

- in which the synchronisation signal (SS) consists of narrow band mark and space signals which form component signals of a diversity pair and alternates periodically with a modulation frequency of the order of 10 Hz, and
- in which the base band carrier for the mark and space signals is freely selectable within a frequency range from about 300 up to 3400 Hz,
  characterised in that in each receiver (2)
- that observation intervals are formed of which the length (T) corresponds substantially to half the length $(T_O)$ of the synchronisation signals (SS),
- that the input signals (r(t)) present at the receiver (2) during the observation intervals are fed to two processing and decision paths $(9_A, 9_B)$ associated with the component signals of the diversity pair,
- that in each path $(9_A, 9_B)$, the signals are processed firstly in analogue and then in digital manner,
  - whereby the observation intervals are weighted with window functions (F) of overlapping intervals,
  - whereby in each path $(9_A, 9_B)$ the signals are at the end of analogue processing, each converted into a sequence of a number (N) of numeral values which form vectors $(\vec{r}_A, \vec{r}_B)$ with a number of vector values corresponding to the relevant number (N) of numerical values,
  - and whereby a decision is made as to whether a synchronisation signal (SS) is present $(H_1)$ or is not present $(H_O)$, the digital processing testing whether the vectors $(\vec{r}_A, \vec{r}_B)$ lie in a decision region of a ⟨synchronisation signal (SS) present $(H_1)$ or not present $(H_O)$⟩ hypothesis.

2. A method according to claim 1, characterised in that the first operation of digital processing is in each case formed by fast Fourier transformation (FFT), in which a separation into actual signal and noise components occurs.

3. A method according to claim 2, characterised in that subsequent to the said fast Fourier transformations (FFT), there is a demodulation of the diversity pair, a noise estimation and possibly a signal integration for useful signals which are difficult to detect, and in that the results of these operations constitute the basis of the decision ⟨synchronisation signal (SS) present $(H_1)$ or not present $(H_O)$⟩.

4. A method according to claim 3, characterised in that the wanted signals are normalised with respect to noise so that only values depending on the signals-to noise ratio reach the ⟨synchronisation signal (SS) present $(H_1)$ or not present $(H_O)$⟩ decision so that interference carriers and false signals are eliminated beforehand.

5. A method according to claim 4, characterised in that after the ⟨synchronisation signal (SS) present $(H_1)$ or not present $(H_O)$⟩ decision a diversity combination takes place on a basis of which the frequency (m) and the phase $(\hat{\phi})$ of a recognised synchronisation signal (SS) are determined.

6. A reception device in a receiver (2) of a shortwave radio network for receiving and recognising synchronisation signals (SS) which are sent out periodically by a transmitter (1) of this network for the purpose of establishing a connection link,
- in which the synchronisation signals (SS) consist of narrow band mark and space signals which form partial component signals of a diversity pair and alternate periodically with a modulation frequency of the order of 10 Hz and which are followed by an address signal (AS), and
- in which the base band carrier for the mark and space signals is freely selectable within a frequency range from about 300 to 3400 Hz,
  characterised by
- means of processing and evaluating the signals (r(t)) present at the input of the receiving device,
- tow identically constructed processing paths $(9_A, 9_B)$ which are associated with the component signals of the diversity pair,
- analogue-operating units (10-15) including an A/D converter (16) in a first part of each processing path $(9_A, 9_B)$ and,
- digitally operating units in a second part of each processing path $(9_A, 9_B)$, this latter comprising at least one window former (F) for weighting time intervals, a fast Fourier transformation unit (FFT), a demodulator (18, 19) of the diversity pair, a noise estimator (20) and a decision unit (21) for making a ⟨synchronisation signal (SS) present $(H_1)$ or not present $(H_O)$⟩ decision.

**7.** A device according to claim 6, characterised in that a total channel filter (8) is provided which precedes the two paths ($9_A$, $9_B$) jointly.

**8.** A device according to claim 6, characterised in that each of the paths ($9_A$, $9_B$)) has in its first part at least one first and one second mixer ($10_A$, $10_B$, 13), an intermediate frequency filter ($11_A$, $11_B$) disposed between the mixers and a sampler (15) and an A/D converter (16).

**9.** A device according to claim 8, characterised in that downstream of each A/D converter (16) is a buffer store (17), each buffer store being intended to store a number (N) of output values from the A/D converters, which form the input values of the second part of each path ($9_A$, $9_B$).

**10.** A device according to claim 7, characterised in that a signal processor is provided which at a ⟨synchronisation signal (SS) present⟩ decision delivers signal to noise combination values ($SNR_A$, $SNR_B$) for the respective recognised component signals of the diversity pair.

**11.** A device according to claim 10, characterised in that the signal processor is constructed for an operation diversity-combination to be undertaken following on from the ⟨synchronisation signal (SS) present⟩ decision by which it is possible to determine the frequency ($\overset{\Delta}{m}$) and the phase ($\hat{\phi}$).

## Revendications

**1.** Procédé pour synchroniser des récepteur (2) d'un réseau radio à ondes courtes avec un émetteur (1) de ce réseau dans le but d'établir une communication, procédé dans lequel :
- l'émetteur (1) concerné émet des signaux d'appel repétés qui se composent respectivement d'un signal de synchronisation (SS) d'une longueur prédéfinie ($T_o$) et d'un signal d'adressage (AS) venant à la suite,
- le signal de synchronisation (SS) est constitué de signaux de repérage et d'espacement à bandes étroites, les signaux partiels forment une paire de diversité et elle ferme périodiquement avec une fréquence de modulation de l'ordre de grandeur de 10 Hz,
- la porteuse de bande de base pour les signaux de repérage et d'espacement est susceptible d'être librement choisie à l'intérieur d'une gamme de fréquence d'environ 300 à 3400 Hz, procédé caractérisé dans chaque récepteur (2) en ce que :
- des intervalles d'observation sont formés, dont la longueur (T) correspond à environ à la moitié de la longueur ($T_o$) des signaux de synchronisation (SS),
- les signaux d'entrée [(r (t)] se présentant au récepteur (2) pendant l'intervalle d'observation sont amenés à deux voies ($9_A$, $9_B$) de traitement et de décision associées aux signaux partiels de la paire de diversité,
- dans chaque voie ($9_A$, $9_B$), les signaux sont traités tout d'abord analogiquement et ensuite numériquement,
  - tandis que les intervalles d'observation sont pondérés avec des fonctions de fenêtre (F) dont les intervalles se chevauchent,
  - tandis que sur chaque voie ($9_A$, $9_B$) les signaux sont respectivement convertis à la fin du traitement analogique en une séquence comportant un nombre (N) de valeurs numériques, qui forment des vecteurs ($\vec{r}_A$, $\vec{r}_B$) avec un nombre de valeurs de vecteurs correspondant au nombre respectif (N) des valeurs numériques,
  - et tandis qu'une décision est prise, à savoir si un signal de synchronisation (SS) est présent ($H_1$) ou non ($H_o$), en vérifiant avec le traitement numérique si les vecteurs ($\vec{r}_A$, $\vec{r}_B$) se trouvent dans le domaine de décision d'une hypothèse, signal de synchronisation (SS) présent ($H_1$), ou non présent ($H_o$).

**2.** Procédé selon la revendication 1, caractérisé en ce que la première opération du traitement numérique est respectivement constituée par une transformation rapide de Fourrier (FFT) au cours de laquelle, il s'effectue respectivement une séparation entre le signal proprement dit et les composantes de bruit.

**3.** Procédé selon la revendication 2, caractérisé en ce que :
- à la suite des transformations rapides de Fourier (FFT), il est respectivement effectué une démodulation de la paire de diversité, une estimation du bruit et éventuellement une intégration de signaux pour des signaux utiles difficiles à détecter,

14

- les résultats de ces opérations forment la base de la décision ⟨ signal de synchronisation (SS) présent ($H_1$) ou bien absent ($H_o$)⟩.

4. Procédé selon la revendication 3, caractérisé en ce que les signaux utiles sont normalisés par rapport au bruit de sorte que seules des grandeurs dépendant du rapport signal/bruit (SNR) arrivent jusqu'à la décision ⟨ signal de synchronisation (SS) présent ($H_1$) ou non ($H_o$)⟩, et que les porteuses parasites et les signaux erronés sont préalablement éliminés.

5. Procédé selon la revendication 4, caractérisé en ce qu'après la décision ⟨ signal de synchronisation (SS) présent ($H_1$) ou non ($H_o$)⟩, une combinaison de diversité à lieu, sur la base de laquelle la fréquence (m) et la phase ($\widehat{\phi}$) d'un signal de synchronisation reconnu (SS) sont déterminées.

6. Dispositif de réception dans un récepteur (2) d'un réseau radio à ondes courtes pour la réception et l'identification de signaux de synchronisation (SS) qui sont émis périodiquement par un émetteur (1) de ce réseau dans le but d'établir une communication, tandis que :
   - les signaux de synchronisation (SS) sont constitués par des signaux de repérage et d'espacement à bandes étroites, qui constituent les signaux partiels d'une paire de diversité, et qui alternent périodiquement avec une fréquence de modulation de l'ordre de grandeur de 10 Hz, et auxquels fait suite un signal d'adressage (AS),
   - la porteuse de bande de base pour les signaux de repérage et d'espacement est susceptible d'être choisie librement à l'intérieur d'une gamme de fréquence d'environ 300 à 3400 Hz,
       dispositif de réception caractérisé en ce qu'il comporte :
   - des moyens pour le traitement et l'exploitation des signaux [(r(t)] s'appliquant à l'entrée du dispositif de réception,
   - deux voies de traitement de construction identique ($9_A$, $9_B$) qui sont associées aux signaux partiels de la paire de diversité,
   - des unités (10 à 15) fonctionnant de façon analogique, y compris un convertisseur analogique numérique (16) dans une première partie de chaque voie de traitement ($9_A$, $9_B$),
   - des unités fonctionnant numériquement dans une se-conde partie de chaque voie de traitement ($9_A$, $9_B$) tandis que cette seconde partie comporte au moins un formateur de fenêtre (F) pour la pondération des intervalles de temps, une unité de transformation rapide de Fournier (FFT), un démodulateur (18, 19) de la paire de diversité, un estimateur de bruit (20) et une unité de décision (21) pour former une décision : Signal de synchronisation (SS) présent ($H_1$) ou non ($H_o$).

7. Dispositif selon la revendication 6, caractérisé en ce qu'il est prévu un filtre de canal total (8) qui est branché en amont de façon commune aux deux voies ($9_A$, $9_B$).

8. Dispositif selon la revendication 6, caractérisé en ce que chacune des voies ($9_A$, $9_B$) comprend dans sa première partie au moins un premier et un second mélangeur ($10_A$, $10_B$, 13), un filtre ZF ($11_A$, $11_B$) disposé entre les mélangeurs, ainsi qu'un échantillonneur (15) et un convertisseur analogique numérique (16).

9. Dispositif selon la revendication 8, caractérisé en ce qu'à la suite de chaque convertisseur analogique numérique (16), est branchée une mémoire tampon (17) pour mémoriser respectivement un nombre (N) de valeurs de sortie du convertisseur analogique numérique, qui forment les grandeurs d'entrée de la second partie de chaque voie ($9_A$, $9_B$).

10. Dispositif selon la revendication 7, caractérisé en ce qu'il est prévu un processeur de signaux qui, lors d'une décision ⟨signal de synchronisation (SS) présent⟩, délivre des grandeurs de combinaison signal/bruit ($SNR_A$, $SNR_B$) pour les signaux partiels reconnus respectifs de la paire de diversité.

11. Dispositif selon la revendication 10, caractérisé en ce que le processeur de signaux est prévu pour une opération de combinaison de diversité à entreprendre à la suite de la décision "signal de synchronisation (SS) présent", et par laquelle la fréquence ($\widehat{m}$) et la phase ($\widehat{\phi}$) du signal de synchronisation reconnu (SS) sont susceptibles d'être déterminées.

FIG.1

FIG.2

FIG.8

FIG. 3

FIG. 4

FIG. 6

FIG. 5

FIG.7a

FIG. 7b